# EUROPEAN PATENT SPECIFICATION

(11) **EP 2 798 939 B1**
(45) Date of publication and mention of the grant of the patent: **20.06.2018**
(21) Application number: 13165695.1
(22) Date of filing: 29.04.2013
(51) Int. Cl.: A01D 43/073, A01D 43/08

(54) **Operating system for and method of operating a controllable transfer device for harvested goods**
Betriebssystem und Verfahren zum Betreiben einer steuerbaren Übertragungsvorrichtung für Erntegut
Système d'exploitation et procédé permettant de faire fonctionner un dispositif de transfert contrôlable pour plantes récoltées

(43) Date of publication of application: 05.11.2014
(73) Proprietor: CLAAS E-Systems KGaA mbH & Co KG, 49201 Dissen a.T.W. (DE)
(72) Inventor: Madsen, Tommy Ertbolle, 2830 Virum (DK); Amhild, Kim, 2200 Copenhagen N (DK); Steen, Sören, 2980 Kokkedal (DK)
(74) Representative: Budach, Steffen

(56) References cited:
- EP-A1- 2 792 229
- EP-A2- 1 219 153
- DE-A1- 4 426 059
- DE-U1-202012 103 730
- US-A1- 2009 044 505
- US-A1- 2011 061 762

## Description

### Technical field

The present invention relates to an operating system for operating a controllable transfer device for harvested goods of an agricultural vehicle, in particular a self-propelled harvester. The invention further relates to an agricultural vehicle comprising an operating system, and to a method of operating a controllable transfer device of an agricultural vehicle by means of an operating system.

### Background of the invention

Harvested goods are commonly transferred from a first agricultural vehicle, for example a forage harvester, to a second agricultural vehicle, for example a trailer towed by a tractor, by means of a transfer device. Due to the relative movement between the agricultural vehicles the transfer device is designed controllable, for example by an operator of the first or second agricultural vehicle.

In order to support an operator, EP 2 266 383 A1 discloses a control arrangement which is provided for controlling the transfer of agricultural crop from a harvesting machine to a transport vehicle, the transport vehicle comprising a loading container. The control arrangement based on signals from a sensor arrangement detects the fill level and/or the outer contours of the loading container and controls the position of the output end of a discharge device with respect to the harvesting machine and/or the ejection direction of the discharge device, and/or the position of the transport vehicle with the loading container with respect to the harvesting machine, automatically in such a manner that the loading container is successively filled with the crop. It is further proposed that the sensor arrangement is designed to detect the position of a second loading container and that the control arrangement can be operated so that after detection of an overall sufficiently filled first loading container, the discharge device will be automatically aligned to the second loading container based on the signals from the sensor arrangement.

This automatic alignment of the transfer device has the drawback, that in case of dust and bits of goods scattered in the air, the sensor arrangement may not be able to align the transfer device properly, in which case the operator needs to manually readjust the transfer device, thus increasing the workload for the operator.
Furthermore US 2011/061762 discloses a 3D-camera based system for monitoring the fill level of transport wagons and a corresponding discharge spout position adjustment arrangement. Such systems work very well if the transport wagon and its boundaries has been identified correctly. During operation the operator does not have any possibilities to affect the spout position adjustment. Normally, it is just possible to interrupt the automatic steering process by the operator.

For involving the operator into the discharge process it is among others from EP 1 219 153 A2 well known to integrate a so-called touch screen monitor into the steering system in a manner that the operator can select the transport wagon what has to be filled automatically by the discharge spout or transferring device of the forage harvester. But also in this case it is impossible for the operator to influence the automatically running filling process.
Document EP 2 792 229 A1, which falls under Art. 54(3) EPC, discloses a control arrangement and method for controlling a position of a transfer device of a harvesting machine comprising a touch-sensitive display unit.

### Summary of the invention

It is therefore an object of the present invention to provide an operating system for a controllable transfer device for harvested goods of an agricultural vehicle, in particular a self-propelled harvester, which improves the operating of the transfer device. A further object of the present invention is to provide a method for operating a controllable transfer device for harvested goods of an agricultural vehicle, which improves the operation of the transfer device.
This object is solved by means of an operating system for operating a controllable transfer device for harvested goods of an agricultural vehicle having the features of claim 1 and by a method of interactively operating a controllable transfer device for harvested goods of an agricultural vehicle having the features of claim 9. Preferred embodiments, additional details, features, characteristics and advantages of the object of the invention of said operating system and said method are disclosed in the subclaims.
In a general aspect of the invention, an operating system for operating a controllable transfer device for harvested goods of an agricultural vehicle, in particular a self-propelled harvester, comprises at least one three-dimensional imaging device for capturing a real object and for deriving a three-dimensional data set for the real object, and a touch-sensitive display unit for displaying an object and for receiving a touch input. According to the invention, the system is configured for generating three-dimensional data set based command signals corresponding to the interaction with the displayed object for operating the transfer device.

An agricultural vehicle may be a combine harvester, a forage harvester, a transport vehicle, a tractor and/or a trailer for receiving and transporting harvested goods. The operating system for operating a transfer device may be located on the agricultural vehicle with the transfer device or on another agricultural vehicle, for example a tractor pulling a trailer to be filled via the transfer device. The controllable transfer device may be an auger of a combine harvester or a spout of a forage harvester, wherein the transfer device may comprise a controllable flap at its free end in order to at least partially control the transfer of the harvested goods. The transfer device may comprise a control unit for controlling the transfer device, in particular actuators moving the transfer device, wherein the control unit may be configured to generate control signals to move, for example by rotating and/or tilting, the transfer device in a position desired for a transfer of harvested goods. The control unit may also control the flap at the free end of the transfer device.

The operating system comprises at least one three-dimensional imaging device for capturing real objects in the real world in order to generate a displayable two-dimensional image to interact with. On capturing the real object, the three-dimensional imaging device, in particular a processing unit of the three-dimensional imaging device, may derive a three-dimensional data set and/or a three-dimensional range image for the captured real object, wherein a distance for each pixel of the three-dimensional imaging device may be calculated, wherein the distance information may relate to relative distance and/or an absolute distance. The three-dimensional imaging device may capture real objects in real time. The derived three-dimensional data set may comprise distance information and/or three-dimensional coordinates of the real object. The distance information may be relative to the operating system and/or the agricultural vehicle and/or absolute, for example as three-dimensional coordinates The absolute distance information may be generated together with a navigation system, in particular with a satellite based navigation system, for example the global positioning system (GPS). The navigation system may provide three-dimensional coordinates, in particular for the three-dimensional imaging system and/or the agricultural vehicle, based on which the three-dimensional coordinates of the real object may be calculated by determining the position, for example distance and bearing, of the real object relative to the three-dimensional imaging device and/or the agricultural vehicle.

The captured real object may be visualised for displaying on a display unit, for example in form of a range image. The visualisation of the captured object may be in form of a live image and/or live video or in form of an artificial video and/or artificial image suitable for visualising the captured distance information to an operator of the operating system. For each visualised, and in particular displayed, pixel on the display unit a corresponding distance information may be calculated. A pixel of the three-dimensional imaging device may be the smallest capturable point of the image resolution of the imaging device, wherein a pixel of the display unit may be the smallest addressable element of the display unit. The resolution of the three-dimensional imaging device may be higher than the resolution of the display unit, wherein the three-dimensional data set may correspond to the higher resolution of the three-dimensional imaging device.

The display unit may be a multifunctional display unit configured to receive touch input, in particular multi touch input, for example up to and including multi touch input with five fingers. The multifunctional display may comprise several subareas, for example in form of a split screen, for independently displaying information and independently receiving touch input. The multifunctional display may comprise additional input elements like buttons and/or wheels. The display unit may receive data from the three-dimensional imaging device for displaying for example a captured and visualised real object and/or a virtual element. Objects, for example in form of a live video of a real object or in form of a virtual element, displayed on the display unit are displayed objects, wherein a three-dimensional data set corresponds to each, in particular captured and/or visualised, displayed object. Displayed objects may be enlarged on the display unit.

The display unit displays the captured and visualised objects and may receive and/or detect feedback in form of touch input, in particular corresponding to a displayed object, wherein the touch input may be received in form of detected two-dimensional coordinates relating to the executed touch input, in particular to the executed input gesture. The touch input may be in form of several different input gestures, wherein the response of the operating system to the different input gestures may be predefined. The displayed object may be interacted with by touch input. The interaction with the displayed object may be by manipulating the displayed object by hand, in particular with at least one finger by touch input. The displayed object may for example be selected, moved and/or altered in shape and/or size. An interaction may be displayed on the display unit in real time, thus allowing for an interactive manipulation of the displayed object.

The received touch input, for example a selection and/or a manipulation of the displayed object, may be transmitted to the imaging device, for example in form of the two-dimensional coordinates. The imaging device, in particular the processing unit of the three-dimensional imaging device, may allocate the received feedback, e.g. two-dimensional coordinates of the touch input, to the displayed object displayed at those coordinates. The three-dimensional imaging device may evaluate the received feedback and correlate the feedback to the corresponding displayed object and the related three-dimensional data set. The three-dimensional imaging device may generate three-dimensional data set based command signals corresponding to the received two-dimensional touch input. The commands signals may be received by the control unit of the controllable transfer device as input signals for operating the transfer device accordingly, for example leaving the transfer device longer allocated to a trailer in order to automatically increase the filling level of harvested goods or for selecting an order in which several trailers are to be filled automatically by the operating system. The command signals may comprise position information of real objects, which may be necessary as input for the control unit in order to correctly position the transfer device. The displayed object is interactively manipulable, wherein a two-dimensional manipulation of the displayed object corresponds to the generating of three-dimensional control commands. The control commands may, for example, be transmitted to the control unit of the transfer device in order to move the transfer device as desired, for example in order to change a hit location of the transferred goods and/or to increase a filling level of transferred goods in a trailer.

The generating of three-dimensional data set based command signals corresponding to an interaction with the displayed object for operating the transfer device has the advantage, that the operator may manually interact with visual information provided by the three-dimensional imaging device. The visual information enables the operator to supervise, for example automated, transfer process of harvested goods and the manipulation of the displayed objects allows for a direct interaction, for example with the transfer process and/or device, if a readjustment or other input is necessary. Thus, the operating system allows for an easy and efficient way to operate the controllable transfer device, reducing the stress and workload for the operator.

In a preferred embodiment of the invention the operating system is further configured for generating command signals in form of control signals for the transfer device for directly controlling the transfer device. The three-dimensional imaging device may be directly linked to the controllable transfer device, in particular actuators moving the transfer device, in order to control the transfer device directly. The command signals generated by the imaging device, in particular based on received touch input feedback, may be control signals, which are directly controlling the actuators of the transfer device. For example, the transfer device or a displayed stream of ejected harvested goods being transferred may be selected by touch input, wherein a movement by touch input may lead to a directly linked movement of the transfer device and of the stream of ejected harvested goods being transferred. This has the advantage, that the transfer device may be controlled directly by the three-dimensional imaging device, which allows for a faster response of the transfer device movement to touch input by the operator on the display unit. In addition, the direct interaction with the displayed object for operating the operating system improves the ease of handling of the system further.

Preferably the operating system is further configured for recognising a captured real object. The operating system may comprise a memory unit for storing reference data corresponding to real objects. The captured real object, in particular the derived three-dimensional data set corresponding to the real object, may be compared to predefined reference data in order to enable a recognition of a real object, for example if it is a trailer and/or which type of trailer it is. If a captured real object is recognised, corresponding object data, for example the dimensions of the real object like length, height and/or width, may be allocated to the real object and/or displayed object and may be provided for the control of the transfer device. The object data may be pre-stored on the memory unit. This has the advantage, that precise data about the real object is efficiently made available, thus, increasing the precision of the transfer process without increasing the workload of the operator.

In a further preferred embodiment the operating system is further configured for allocating and/or changing data corresponding to a displayed object. The captured real object, in particular the derived three-dimensional data set corresponding to the real object, may be compared to predefined reference data in order to enable a recognition of a real object, for example if it is a trailer or which type of trailer it is. In case a captured real object, that is shown as a displayed object on the display unit, has not been recognised, the operator may allocate object data, for example retrieved from the memory unit, to the displayed object corresponding to the real object. A displayed object may also be generated and displayed for a real object that has transmitted its position to the operating system, for example in form of three-dimensional coordinates. The real object may transmit an identifier together with the information about its position. The identifier enables an identification of the real object, for example what type of object it is. The object data corresponding to the real object that has transmitted its position, and in particular an identifier, to the operating system may be retrieved from the memory unit in order to reduce the data that needs to be transmitted. Such real object may for example be another agricultural vehicle, for example a transport vehicle or a tractor with a trailer. The displayed object may be corrected by the operator. This has the advantage, that the transfer of harvested goods may be more efficient due to a better filling of a previously unrecognised trailer for example. The object data may be changed, for example, in case the real object has been wrongly recognised or alterations to the object data are necessary. The allocation and/or changing of data corresponding to a displayed object may be executed by touch input, in particular by an input gesture, on the display unit, in particular by altering the displayed object. This has the advantage, that the operator may easily and more efficiently operate the transfer device, reducing the workload for the operator.

In a more preferred embodiment of the invention the operating system is further configured for generating a visual and/or audible feedback, in particular to a touch input. A touch input, for example for selecting and/or manipulating a displayed object, may cause an audible and/or visual feedback in order to indicate to the operator the execution of the desired action. The audible and/or visible feedback may be given by a visual indication on the display unit, an indicator light and/or a audible signal like a tone or a message. This has the advantage, that the operator gets a distinct feedback to his input.

Preferably, the operating system is further configured for generating at least one virtual element corresponding to a displayed object. The virtual element may be generated by the three-dimensional imaging device and may be displayed on the display unit, for example laying over a displayed real object. The virtual element may be interactively manipulable by touch input. A displayed object may be a real object, for example as a live image and/or video, and/or a virtual element. A virtual element may be generated according to a recognised and displayed real object, for example in form of an artificial image of the real object, a symbol, or graphical elements.
The object data corresponding to the displayed real object may, for example, comprise information about the dimensions of a trailer, the maximum filing height and/or information about security distances indicating how close to a wall of the trailer the transfer device may transfer harvested goods. A virtual element representing the walls and/or safety distances of the recognised trailer may be shown as displayed objects, virtual elements, laid over a live image of the trailer. The object data may be changed, for example, in case the real object has been wrongly recognised or alterations to the object data are necessary, by interacting with the virtual element. For example, the security distances of the trailer, limiting the movement of the transfer device, may be altered by selecting and moving them by touch input, widening or narrowing the area available for the transfer device to transfer goods, thus generating command signals for the control unit, allowing the transfer device to be moved and operated accordingly. The advantage of a virtual element is an increase in information that may be shown to the operator without increasing the workload. Additionally further interactions can be incorporated into the operating system, enhancing the input options for the operator.

In a preferred embodiment of the invention the three-dimensional imaging device comprises at least one electro-optical range imaging device, in particular in form of a stereo camera, a light detecting and ranging device and/or a time-of-flight camera. The electro-optical range imaging device may be an active and/or passive range imaging device for generating an interactive two-dimensional image of a captured three-dimensional real world and/or a three-dimensional real object showing for example the distance to individual points in a scene of the real world from the electro-optical range imaging device. The light detection and ranging device, called LIDAR or sometimes LADAR which is short for Laser Imaging Detection and Ranging, is an active optical remote sensing technology that may measure a distance to an object, like the ground or a real object, by illuminating the target with laser light and analyzing the backscattered light. The time-of-flight camera, as an active range imaging device, may resolves distance based on the known speed of light, measuring the time-of-flight of a light signal between the camera and a real object for each point of the image. The three-dimensional imaging device might be radar or ultra-sonic based range imaging device. Different kinds of three-dimensional imaging devices may be combined. A resulting three-dimensional data set may for example be visualised as a corresponding range image, wherein the range image comprises pixel values each corresponding to a distance. The range image may be visualised from the three-dimensional data set by the three-dimensional imaging device in order to provide an image displayable on the display unit for the operator, for example in form of a live image and/or video of the real world and/or object. The stereo camera, as a passive range imaging device, may derive the three-dimensional data set and the corresponding pixel values for a real object directly from the captured image. The range image may be assembled from separate three-dimensional data sets and/or range images, for example in form of a panoramic picture, wherein the individual range images may originate from one or more, even different, three-dimensional imaging devices. This has the advantage, that the field of view may be enlarged.

The invention further relates to an agricultural vehicle comprising at least one operating system as described above. The inventive operating system allows for an easy and efficient way to operate the controllable transfer device, reducing the stress and workload for the operator.

A further aspect of the present invention is a method of interactively operating, in particular by means of an operating system as described above, a controllable transfer device for harvested goods of an agricultural vehicle, in particular a self-propelled harvester, comprising the steps of
- deriving a three-dimensional data set for a real object captured by a three-dimensional imaging device,
- displaying an object on the touch-sensitive display unit,
- receiving feedback from the display unit from touch input interaction with the displayed object,
- generating three-dimensional data set based command signals corresponding to the interaction with the displayed object for operating the transfer device.

A three-dimensional imaging device may capture an image of a real object in the real world for deriving a three-dimensional data set for the captured real object. The three-dimensional data set may comprise information, in particular position information, about the distance of the real object to the imaging device and/or the agricultural vehicle. Each pixel of the captured image of the imaging device may comprise a distance information from the real object to the imaging device. The three-dimensional data set may comprise relative and/or absolute position information and/or three-dimensional coordinates. The three-dimensional coordinates may be generated by support of a navigation system, in particular a satellite based navigation system, for example the global positioning system (GPS). The navigation system may provide three-dimensional coordinates, in particular for the three-dimensional imaging system and/or the agricultural vehicle, based on which the three-dimensional coordinates of the real object may be calculated by determining the position, for example distance and bearing, of the real object relative to the three-dimensional imaging device and/or the agricultural vehicle. Visualising the captured real object may provide a displayable image of the image captured by the imaging device. The visualisation of the real object may be in form of a live and/or an artificial image and/or video of the real object. This allows for a presentation of the three-dimensional information that may easily be absorbed by an operator of the agricultural vehicle operating the transfer device. For displaying the visualised captured real object, information may be transmitted from the imaging device to a touch sensitive display unit. The visualised captured real object may be displayed as a displayed object on the display unit, wherein several objects may be displayed in one or more subareas of the display unit separately and/or together. The display unit may be sensitive to multi touch input, in particular for each subarea and/or displayed object.

A displayed object may be interacted with by touching the touch sensitive display unit in the area showing the displayed object. The interacting may be in form of selecting the displayed object and/or by manipulating the displayed object, for example it shape and/or dimensions. The touch input is registered as feedback by the display unit in two-dimensional coordinates. The two-dimensional coordinates of the feedback and the interaction with the displayed object are transmitted back to the three-dimensional imaging device, wherein the three-dimensional imaging device correlates the two-dimensional coordinates to the three-dimensional data set corresponding to the displayed object. Based on the interaction with the displayed object command signals for operating the transfer device according to the interaction may be generated, based on the three-dimensional data set. The command signals may be transferred as input signals to a control unit controlling the transfer device. The generated command signals may comprise three-dimensional data set based information corresponding to the touch input, for example three-dimensional coordinates of a selected position or an intended movement of the transfer device, which may then be transmitted as input signals to the control unit, which controls the transfer device accordingly in order to execute the movement and/or operation intended by the interaction with the displayed object. For example, a hit location, where harvested goods are to be dumped, on a displayed object in form of a trailer may be selected by touch input, wherein the two-dimensional coordinates of the touch input are transmitted to the imaging device, which correlates these two-dimensional coordinates to a three-dimensional coordinate based on the three-dimensional data set of the displayed trailer. This three-dimensional coordinate may then be transmitted as input signals to a control unit controlling the transfer device, so that the control unit may position the transfer device accordingly in order to transfer the harvested goods to the hit location selected by the operator.

The generating of three-dimensional data set based command signals corresponding to an interaction with the displayed object for operating the transfer device has the advantage, that the operator may manually interact with visual information provided by the three-dimensional imaging device for operating the transfer device. The visual information enables the operator to supervise a, for example automated, transfer process of harvested goods and the manipulation of the displayed objects allows for a direct interaction, for example with the transfer process, in order to execute readjustments or other input if necessary. Thus, the operating system allows for an easy and efficient way to operate the controllable transfer device, reducing the stress and workload for the operator.

In a preferred embodiment of the invention the method further comprises the step of generating command signals in form of control signals for directly controlling the transfer device. The command signals may be generated in form of control signals, which may be transmitted directly to at least one actuator of the transfer device in order to directly control the movement of the transfer device. Thus, the interaction with the displayed object by touch input may be directly transferred into control signals for directly controlling at least one actuator of the transfer device. This has the advantage, that the transfer device may be controlled directly by the three-dimensional imaging device, which allows for a faster response of the transfer device movement to touch input by the operator on the display unit. For example, the displayed object of the stream of ejected harvested goods being transferred may be interacted with on the touch sensitive display, wherein the stream may be selected by an according input gesture and may be dragged to another position, wherein the transfer device and the stream of ejected harvested goods being transferred are directly responding and moving according to the touch input.

In a more preferred embodiment of the invention the method further comprises the step of recognising a captured real object. A captured real object, in particular the derived three-dimensional data set corresponding to the real object, may be compared to predefined reference data in order to enable a recognition of a real object. The reference data may be pre-stored on a memory unit. When recognising a real object by comparing the derived three-dimensional data set with reference data, corresponding object data may be allocated to the captured real object and provided for controlling the transfer device. The object data may be pre-stored on the memory unit. Object data may, for example, be the precise dimensions of the real object, like height, width, length, the load capacity, filling height, etc. This has the advantage, that precise data about the real object is efficiently made available for operating the transfer process and/or device, thus, increasing the precision of the transfer process without increasing the workload of the operator.

In a much preferred embodiment of the invention the method further comprises the step of storing and/or retrieving reference data, in particular for comparing a derived three-dimensional data set with reference data. Reference data may be retrieved and used for comparing the derived three-dimensional data set from a captured real object with pre-stored data. In case a real object may not be recognised, in particular if no reference data is available, the derived three-dimensional data set of the captured unrecognised real object may be stored, for example in the memory unit, as reference data. This could be the case if a new type of trailer is used for receiving the harvested goods. The stored reference data may be complemented with further, more precise information about the real object, for example from a data sheet of the real object. This has the advantage, that an unrecognised real object may only need to be stored once in order to automatically recognise it afterwards, thus, reducing the workload for the operator.

In a further preferred embodiment of the invention the method further comprises the step of allocating and/or changing data corresponding to a displayed object. The data corresponding to a displayed object may be a three-dimensional data set, object data and/or reference data. In case a captured real object, that is shown as a displayed object, has not been recognised, object data may be allocated to the displayed object by the operator. The allocated object data may, for example, be retrieved from the memory unit. In case a captured real object, that is shown as a displayed object, has not been recognised correctly, the object data allocated to the displayed object may be change by the operator, for example by retrieving the correct object data from the memory unit and/or by altering the object data, for example by touch input, on the display unit. A displayed object may also be generated and displayed for a real object that has transmitted its position to the operating system, for example in form of three-dimensional coordinates. The real object may transmit an identifier together with the information about its position. The object data corresponding to the real object that has transmitted its position to the operating system may be retrieved from the memory unit in order to reduce the data that needs to be transmitted. Such real object may be another agricultural vehicle, for example a transport vehicle or a tractor with a trailer. The displayed object may be corrected by the operator. This has the advantage, that the transfer of harvested goods may be more efficient due to more precise data, for example the filling height, of a previously unrecognised trailer.

Preferably the method further comprises the step of generating a visual and/or audible feedback, in particular to a touch input. Interacting with the displayed object, in particular by touch input, may be supported by audio and/or visual feedback in order to indicate the execution of the desired action. The audible and/or visible feedback may be given by a visual indication on the display unit, an indicator light and/or a audible signal like a tone or a message. This has the advantage, that the operator gets a distinct feedback to his input.

In a preferred embodiment of the invention the method further comprises the step of generating at least one virtual element corresponding to a displayed object. The virtual element may be generated by the three-dimensional imaging device and may be displayed on the display unit. The virtual element may be laid over the visualised real object. The virtual element may be interactively manipulable by touch input. A displayed object may be a real object, for example as a live image and/or video, and/or a virtual element. The virtual element may be generated according to a displayed and recognised real object, for example in form of an artificial image of the real object, a symbol, or graphical elements.
For generating a virtual element, object data corresponding to the displayed and recognised real object may be incorporated, for example by incorporating object information into the virtual element, like an indication of the maximum filling height or security distances indicating how close to a wall of the trailer the transfer device may transfer harvested goods. A virtual element representing the walls and/or security distances of the recognised trailer may be shown as a displayed object, in form of virtual elements, laid over a live image of the trailer. The interaction with the displayed object, for example in form of a virtual element, may be transferred into three-dimensional data set based command signals, for example by transmitting the altered security distances in form of, in particular relative, three-dimensional coordinates to the control unit, thus enabling the control unit to move and operate the transfer device according to the new security distances. The advantage of a virtual element is an increase in information that may be shown to the operator without increasing the workload. Additionally further interactions can be incorporated into the operating system, enhancing the input options for the operator.

The afore mentioned components, as well as the claimed components and the components to be used in accordance with the invention in the described embodiments, are not subject to any special exceptions with respect to their size, shape, material selection and technical concept such that the selection criteria known in the pursuant field can be applied without a limitation.

### Brief description of the drawings

Additional details, features, characteristics and advantages of the object of the invention are disclosed in the figures and the following description of the respective figures, which - in exemplary fashion - show one embodiment and examples of an operating system and a method of operating according to the invention.

In the drawings:
- Fig. 1:: illustrates a schematic view of agricultural vehicles with an operating system according to the invention;
- Fig. 2:: shows a schematic view of an operating system according to the invention;
- Fig. 3:: shows an image of selecting a trailer;
- Fig. 4:: illustrates the interacting with a transfer device;
- Fig. 5:: illustrates the interacting with a virtual element;
- Fig. 6:: illustrated the changing of object data;
- Fig. 7:: illustrates the selecting of a hit location; and
- Fig. 8:: shows an image of a trailer.

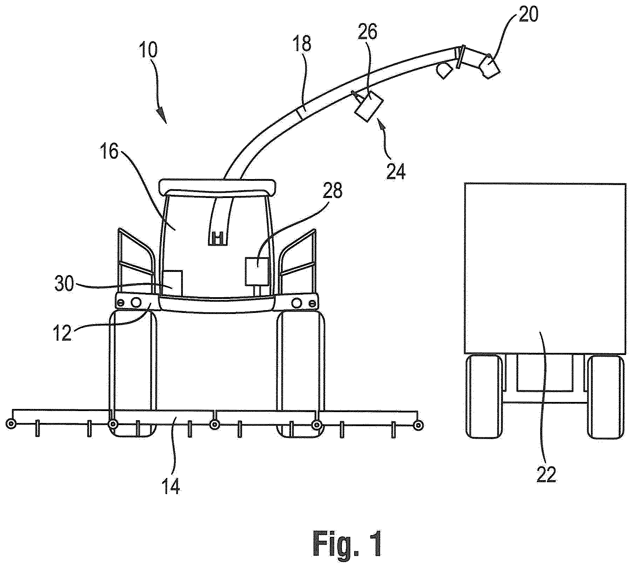

Fig. 1 illustrates a schematic view of two agricultural vehicles, wherein the operating system 10 is mounted on a forage harvester 12, shown in a front view, comprising a header 14, a cabin 16 and a controllable transfer device 18 with a controllable flap 20 at its free end. During operation the harvested goods are processed by the harvester 12 and ejected through the transfer device 18. In order to collect the harvested goods, a trailer 22 is arranged next to the harvester 12 within reach of the transfer device 18. A three-dimensional imaging device 24 with an electro-optical range imaging device in form of a stereo camera 26 for capturing real objects, like the trailer 22, is attached to the transfer device 18, facing the trailer 22. The three-dimensional imaging device 24 is overlooking and capturing at least part of the trailer 22. The three-dimensional imaging device 24 is connected to a touch sensitive display unit 28 for displaying a visualised image of the real object captured by the stereo camera 26. The controllable transfer device 18 is rotatable and tiltable mounted on the harvester 12. The transfer device 18 and the flap 20 are controllable by a control unit 30, configured to receive command signals from the three-dimensional imaging device 24.

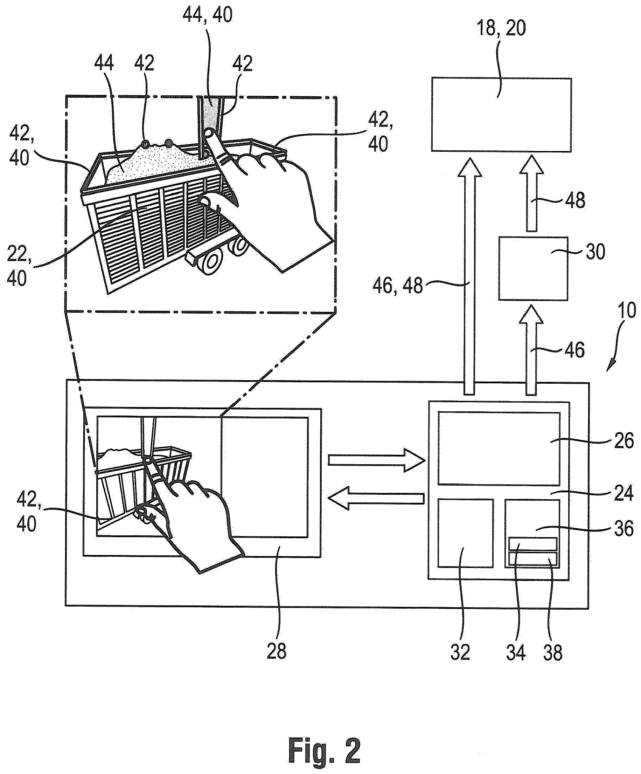

In fig. 2 a schematic view of the operating system 10 is illustrated. The stereo camera 26 of the three-dimensional imaging device 24 captures a real object in form of the trailer 22. The three-dimensional imaging device 24 comprises a processing unit 32 for deriving a three-dimensional data set for the captured real object in form of the trailer 22. The captured real object is visualised for display on the touch sensitive display unit 28. Visualising means processing the captured information from the three-dimensional imaging device 24 into a displayable and visually recognisable form for an operator of the operating system 10.

The three-dimensional data set may be compared with reference data 34 stored in a memory unit 36 of the three-dimensional imaging device 24. If the real object is recognised, based on the comparing of the generated three-dimensional data set with the stored reference data 34, object data 38 corresponding to the recognised real object may be allocated to the object. The object data 38 is also stored in the memory unit 36. The object data 38 may comprise additional information about the real object, for example what type of trailer 22 it is, the precise dimensions of the trailer, height of the side walls of the trailer 22, maximum filling height, etc. The visualised information of the captured real object is transmitted to the display unit 28 and shown as a displayed object 40 in at least part of the touch sensitive display unit 28 (the displayed live image of the real object is shown enlarged in fig. 2). The displayed object 40 may be a live image and/or video, a synthetic image and/or a virtual element 42. The virtual element 42 may comprise and visualise additional information about a displayed object 40, in this case the trailer 22. The virtual element 42 is shown as a rectangular frame indicating the borders of the side walls of the trailer 22. The filling height is also indicated by virtual elements 42 in form of coloured dots, indicating the position of heaps of transferred harvested goods 44 as well as the filling height due to their position and their colour. The vertical borders of the stream of ejected harvested goods 44 being transferred are also indicated by virtual elements 42.

The displayed objects 40 are interactively manipulable by touch input, in particular by predefined input gestures. The harvested goods 44 ejected from the transfer device 18 are selected by touch input, for example with the index finger, and may be moved or otherwise interacted with. This touch input is transmitted back to the three-dimensional imaging device 24 as feedback comprising the two-dimensional coordinates of the touch input. If, for example, the operator were to move or drag the selected displayed object 40, in this case the stream of ejected harvested goods 44 being transferred, the three-dimensional imaging device 24 generates three-dimensional data set based command signals 46 according to the interaction with the displayed object 40 for operating the transfer device 18 accordingly. The control commands 46 may be sent to the control unit 28 of the transfer device 18, in order to control and operate the transfer device 18 accordingly, for example holding the transfer device 18 in a defined position until a certain height of harvested goods 44 is reached and then automatically moving the transfer device 18 to a next position, selectable by touch input, wherein the three-dimensional coordinates are generated based on the two-dimensional touch input. Thus, control commands 46 may be commands for operating the transfer device 18 in a certain way, in particular chronologically independent from the touch input. A special type of command signals 46 are control signals 48, generated to directly control at least one actuator for moving the transfer device 18. The control signals 48 may be generated by the control unit 30 and/or the three-dimensional imaging device 24, in particular the processing unit 32 of the three-dimensional imaging device 24. In the case of the selected stream of ejected harvested goods 44 being transferred, the dragging of the stream could, according to the input gesture, result in the transfer device 18 being moved in real time to follow the interaction with the displayed object 40 of the harvested goods 44 in form of a touch input on the display unit 28.

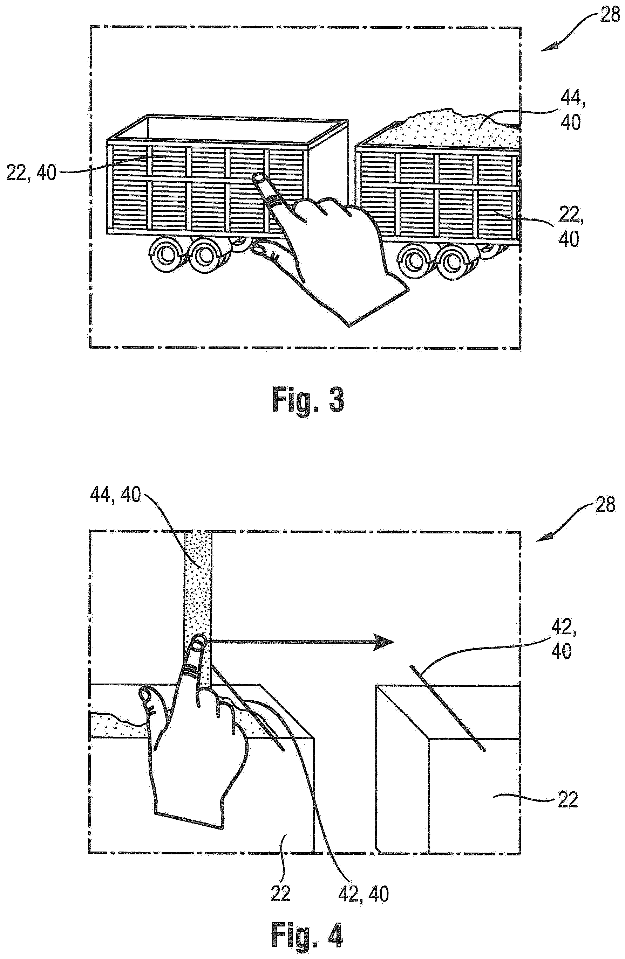

The selecting of a second trailer 22 is shown in fig. 3. The first trailer 22 is filled with harvested goods 44 and the empty second trailer 22 is selected by interacting with the displayed object 40, representing the empty second trailer 22. The touch input is transmitted to the three-dimensional imaging device 24 which generates control commands 46 for positioning the transfer device 18 accordingly in order to fill the second trailer 22 with harvested goods 44. The selecting and dragging of the stream of harvested goods 44 is shown in fig. 4. According to the object data 38 corresponding to the recognised trailer 22, security distances are shown as virtual elements 42, indicating the limits for the transfer of harvested goods 44 and thus for the positioning of the transfer device 18. By dragging the selected stream of ejected harvested goods 44 being transferred across the security distances, for example to the right in the direction shown towards the empty trailer 22, an override function in order to cross the security distances may be activated, moving the transfer device 18 towards the possibly yet unrecognised empty trailer 22. An allocation of object data to the empty trailer 22 could be executed by touch input.

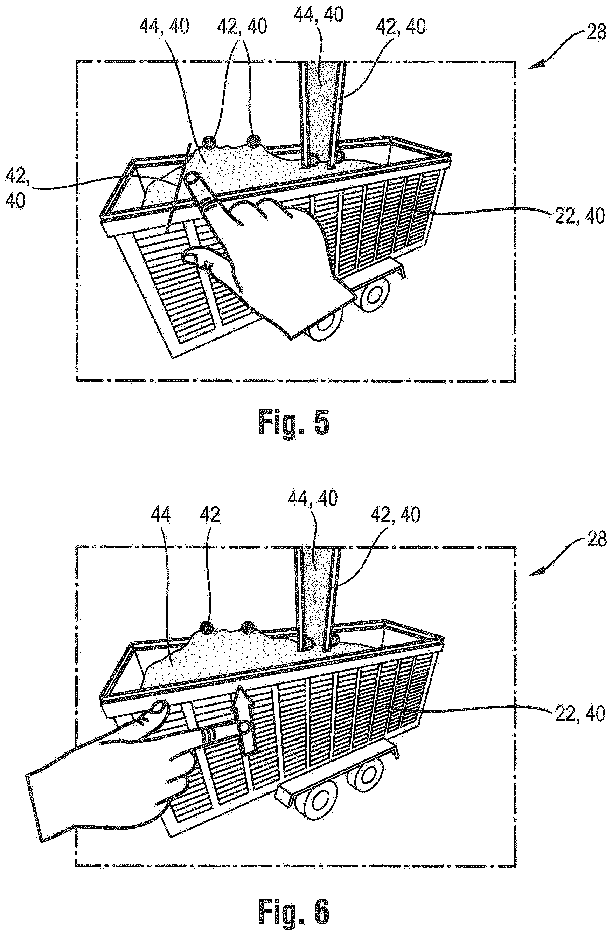

A selected displayed object 40 in form of a virtual element 42 representing a security distance may be moved to a desired new position, for example further towards the end of the trailer 22, by touch input (fig. 5). The interacting with the virtual element 42 by moving the virtual element 42 leads to an alteration of the object data 38 corresponding to the displayed trailer 22. The two-dimensional change in the position of the virtual element 42 correlates to a three-dimensional change in the coordinates of the security distance deposited in the object data of the trailer 22, which is changed and may be stored in the memory unit (not shown). The filling height of the trailer 22 shown in fig. 6 may be altered, for example increased, after selecting the virtual elements 42 and by executing an appropriate input gesture, for example an upward swiping. The filling height might be increased for one or more selected heaps of harvested goods 44 or in total. An increase of the filling height might be desirable in case of dry and thus less heavy harvested goods, so that a maximum payload of the trailer can be used efficiently. A decrease of the maximum filling height might be desirable in case of damp or wet and thus heavy harvested goods, so that the maximum payload of the trailer is not exceeded.

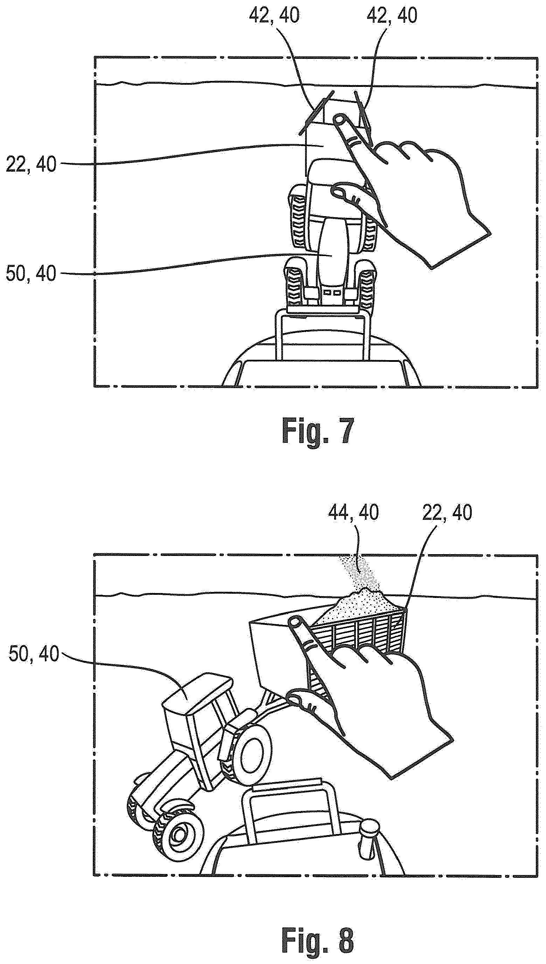

In fig. 7 the transfer device 18 faces to the rear of the forage harvester and towards a tractor 50 with a trailer 22. The trailer 22 has been recognised and corresponding security distances are displayed as virtual elements 42, indicating the lateral borders for filling the trailer 22. The hit location, where the ejected harvested goods 44 are to be thrown to, is selected by touching the desired location on the displayed object 40, the trailer 22. The two-dimensional coordinates of the touch input are used by the three-dimensional imaging device 24 for generating control commands 46 comprising the corresponding three-dimensional coordinates of the hit location. The hit location may also be selected by interacting with the displayed object 40, wherein the displayed object 40 may be unrecognised and no additional information is shown in form of a virtual element (fig. 8). In this case the two-dimensional input coordinates are transferred to three-dimensional command controls based on the three-dimensional data set of the captured and displayed, unrecognised real object.

The particular combinations of elements and features in the above detailed embodiments are exemplary only; the interchanging and substitution of these teachings with other teachings in this and the patents/applications incorporate by reference are also expressly contemplated. As those skilled in the art will recognise, variations, modifications, and other implementations of what is described herein can occur to those of ordinary skill in the art without departing from the spirit and the scope of the invention as claimed. Accordingly, the foregoing description is by the way of example only and is not intending as limiting. In the claims, the wording "comprising" does not exclude other elements or steps, and the identified article "a" or "an" does not exclude a plurality. The mere fact that certain measures are recited in mutually different dependent claims does not indicate that a combination of these measures cannot be used to advantage. The inventions scope is defined in the following claims and the equivalents thereto. Furthermore, reference signs used in the description and claims do not limit the scope of the invention as claimed

### List of reference signs

- 10: Operating system
- 12: forage harvester
- 14: header
- 16: cabin
- 18: transfer device
- 20: flap
- 22: trailer
- 24: three-dimensional imaging device
- 26: stereo camera
- 28: display unit
- 30: control unit
- 32: processing unit
- 34: reference data
- 36: memory unit
- 38: object data
- 40: displayed object
- 42: virtual element
- 44: harvested goods
- 46: command signal
- 48: control signal
- 50: tractor

## Claims

1. Operating system for operating a controllable transfer device (18) for harvested goods (44) of an agricultural vehicle, in particular a self-propelled harvester (12), comprising at least one three-dimensional imaging device (24) for capturing a real object and for deriving a three-dimensional data set for the real object, and a touch-sensitive display unit (28) for displaying an object (40,42) and for receiving a touch input, **characterised in that**
the operating system (10) is configured for generating three-dimensional data set based command signals (46) corresponding to the interaction with the displayed object (40) for operating the transfer device (18) whereby the operating system is so configured that the interaction with the displayed object (40) by touch input can be directly transferred into control signals for directly controlling at least one actuator of the transfer device (18) device in the manner that the operator moves or drags the selected displayed stream of ejected harvested goods (44) being transferred, and the three-dimensional imaging device (24) generates three-dimensional data set based command signals (46) according to the interaction with the displayed object (40) for operating the transfer device (18) accordingly.

2. System according to claim 1, wherein the system is further configured for generating command signals (46) in form of control signals (48) for the transfer device (18) for directly controlling the transfer device (18).

3. System according to claim 1 or 2, wherein the system is further configured for recognising a captured real object.

4. System according to any of the previous claims, wherein the system is further configured for allocating and/or changing data corresponding to a displayed object (40).

5. System according to any of the previous claims, wherein the system is further configured for generating a visual and/or audible feedback, in particular to a touch input.

6. System according to any of the previous claims, wherein the system is further configured for generating at least one virtual element (42) corresponding to a displayed object (40).

7. System according to any of the previous claims, wherein the three-dimensional imaging device (24) comprises at least one electro-optical range imaging device, in particular in form of a stereo camera (26), a light detection and ranging device, and/or a time-of-flight camera.

8. Agricultural vehicle comprising at least one operating system (10) according to any of the claims 1 to 7.

9. A method of interactively operating, by means of an operating system (10) according to claims 1 to 7, a controllable transfer device (18) for harvested goods (44) of an agricultural vehicle, in particular a self-propelled harvester (12), comprising the steps of
- deriving a three-dimensional data set for a real object captured by a three-dimensional imaging device (24),
- displaying an object on the touch-sensitive display unit (28),
- receiving feedback from the display unit (28) from touch input interaction with the displayed object (40),
- generating three-dimensional data set based command signals (46) corresponding to the interaction with the displayed object (40) for operating the transfer device (18).

10. Method according to claim 9, further comprising the step of generating command signals (46) in form of control signals (48) for directly controlling the transfer device (18).

11. Method according to claim 9 or 10, further comprising the step of recognising a captured real object.

12. Method according to any of the claims 9 to 11, further comprising the step of storing and/or retrieving reference data (34), in particular for comparing a derived three-dimensional data set with reference data (34).

13. Method according to any of the claims 9 to 12, further comprising the step of allocating and/or changing data (34,38) corresponding to a displayed object (40).

14. Method according to any of the claims 9 to 13, further comprising the step of generating a visual and/or audible feedback, in particular to a touch input.

15. Method according to any of the claims 9 to 14, further comprising the step of generating at least one virtual element (42) corresponding to a displayed object.

## Patentansprüche

1. Betriebssystem zum Betreiben einer steuerbaren Übertragungsvorrichtung (18) für Erntegut (44) eines landwirtschaftlichen Fahrzeugs, insbesondere einer Erntemaschine (12) mit Eigenantrieb, umfassend zumindest ein dreidimensionales Bildgebungsgerät (24) zum Erfassen eines realen Objekts und zum Ableiten eines dreidimensionalen Datensatzes für das reale Objekt, und eine berührungsempfindliche Anzeigeeinheit (28) zum Anzeigen eines Objekts (40, 42) und zum Empfangen einer Berührungseingabe, **dadurch gekennzeichnet, dass**
das Betriebssystem (10) zum Erzeugen von auf dem dreidimensionalen Datensatz basierenden Befehlssignalen (46), die der Interaktion mit dem angezeigten Objekt (40) entsprechen, zum Betreiben der Übertragungsvorrichtung (18) konfiguriert ist, wobei das Betriebssystem derart konfiguriert ist, dass die Interaktion mit dem angezeigten Objekt (40) durch Berührungseingabe direkt in Steuersignale zum derartigen direkten Steuern von zumindest einem Betätigungsglied der Übertragungsvorrichtung (18) umgesetzt werden kann, dass die Bedienungsperson den ausgewählten angezeigten Strom von ausgeworfenem Erntegut (44), das übertragen wird, bewegt oder schleppt, und das dreidimensionale Bildgebungsgerät (24) auf dem dreidimensionalen Datensatz basierende Befehlssignale (46) gemäß der Interaktion mit dem angezeigten Objekt (40) zum Betreiben der Übertragungsvorrichtung (18) entsprechend erzeugt.

2. System nach Anspruch 1, wobei das System ferner zum Erzeugen von Befehlssignalen (46) in Form von Steuersignalen (48) für die Übertragungsvorrichtung (18) zum direkten Steuern der Übertragungsvorrichtung (18) konfiguriert ist.

3. System nach einem der Ansprüche 1 oder 2, wobei das System ferner zum Erkennen eines erfassten realen Objekts konfiguriert ist.

4. System nach einem der vorhergehenden Ansprüche, wobei das System ferner zum Zuordnen und/oder Ändern von Daten, die einem angezeigten Objekt (40) entsprechen, konfiguriert ist.

5. System nach einem der vorhergehenden Ansprüche, wobei das System ferner zum Erzeugen einer sichtbaren und/oder hörbaren Rückmeldung, insbesondere auf eine Berührungseingabe, konfiguriert ist.

6. System nach einem der vorhergehenden Ansprüche, wobei das System ferner zum Erstellen von zumindest einem virtuellen Element (42), das einem angezeigten Objekt (40) entspricht, konfiguriert ist.

7. System nach einem der vorhergehenden Ansprüche, wobei das dreidimensionale Bildgebungsgerät (24) zumindest ein elektrooptisches Entfernungsbildgebungsgerät, insbesondere in Form einer Stereokamera (26), ein Lichterkennungs- und Entfernungsgerät und/oder eine Laufzeitkamera umfasst.

8. Landwirtschaftliches Fahrzeug, umfassend zumindest ein Betriebssystem (10) gemäß einem der Ansprüche 1 bis 7.

9. Verfahren zum interaktiven Betreiben, mittels eines Betriebssystems (10) gemäß einem der Ansprüche 1 bis 7, einer steuerbaren Übertragungsvorrichtung (18) für Erntegut (44) eines landwirtschaftlichen Fahrzeugs, insbesondere einer Erntemaschine (12) mit Eigenantrieb, die folgenden Schritte umfassend:
- Ableiten eines dreidimensionalen Datensatzes für ein reales Objekt, das durch ein dreidimensionales Bildgebungsgerät (24) erfasst wird,
- Anzeigen eines Objekts auf der berührungsempfindlichen Anzeigeeinheit (28),
- Empfangen einer Rückmeldung von der Anzeigeeinheit (28) aus Berührungseingabeninteraktion mit dem angezeigten Objekt (40),
- Erzeugen von auf dem dreidimensionalen Datensatz basierenden Befehlssignalen (46), die der Interaktion mit dem angezeigten Objekt (40) entsprechen, zum Betreiben der Übertragungsvorrichtung (18).

10. Verfahren nach Anspruch 9, ferner umfassend den Schritt des Erzeugens von Befehlssignalen (46) in Form von Steuersignalen (48) zum direkten Steuern der Übertragungsvorrichtung (18).

11. Verfahren nach einem der Ansprüche 9 oder 10, ferner umfassend den Schritt des Erkennens eines erfassten realen Objekts.

12. Verfahren nach einem der Ansprüche 9 bis 11, ferner umfassend den Schritt des Speicherns und/oder Abrufens von Referenzdaten (34), insbesondere zum Vergleichen eines abgeleiteten dreidimensionalen Datensatzes mit Referenzdaten (34).

13. Verfahren nach einem der Ansprüche 9 bis 12, ferner umfassend den Schritt des Zuordnens und/oder Änderns von Daten (34, 38), die einem angezeigten Objekt (40) entsprechen.

14. Verfahren nach einem der Ansprüche 9 bis 13, ferner umfassend den Schritt des Erzeugens einer sichtbaren und/oder hörbaren Rückmeldung, insbesondere auf eine Berührungseingabe.

15. Verfahren nach einem der Ansprüche 9 bis 14, ferner umfassend den Schritt des Erstellens von zumindest einem virtuellen Element (42), das einem angezeigten Objekt entspricht.

## Revendications

1. Système d'exploitation pour exploiter un dispositif de transfert commandable (18) pour des produits récoltés (44) d'un véhicule agricole, en particulier d'une récolteuse automotrice (12), comprenant au moins un dispositif d'imagerie tridimensionnel (24) pour capturer un objet réel et pour déduire un ensemble de données tridimensionnel pour l'objet réel, et une unité d'affichage tactile (28) pour afficher un objet (40, 42) et pour recevoir une entrée tactile, **caractérisé en ce que** le système d'exploitation (10) est configuré pour générer des signaux d'instruction (46) basés sur l'ensemble de données tridimensionnel et correspondant à l'interaction avec l'objet affiché (40) pour exploiter le dispositif de transfert (18), le système d'exploitation étant configuré de façon que l'interaction avec l'objet affiché (40) par entrée tactile puisse être transposée directement en signaux de commande pour commander directement au moins un actionneur du dispositif de transfert (18), de façon que l'opérateur déplace ou traîne le flux affiché sélectionné de produits récoltés éjectés (44) en cours de transfert, et le dispositif d'imagerie tridimensionnel (24) générant des signaux d'instruction (46), basés sur l'ensemble de données tridimensionnel, conformément à l'interaction avec l'objet affiché (40) pour actionner le dispositif de transfert (18) en conséquence.

2. Système selon la revendication 1, dans lequel le système est également configuré pour générer des signaux d'instruction (46) en forme de signaux de commande (48) pour le dispositif de transfert (18) pour commander directement le dispositif de transfert (18).

3. Système selon la revendication 1 ou 2, dans lequel le système est également configuré pour reconnaître un objet réel capturé.

4. Système selon l'une quelconque des revendications précédentes, dans lequel le système est également configuré pour attribuer et/ou modifier des données correspondant à un objet affiché (40).

5. Système selon l'une quelconque des revendications précédentes, dans lequel le système est également configuré pour générer une rétroaction visuelle et/ou auditive, en particulier à une entrée tactile.

6. Système selon l'une quelconque des revendications précédentes, dans lequel le système est également conçu pour générer au moins un élément virtuel (42) correspondant à un objet affiché (40).

7. Système selon l'une quelconque des revendications précédentes, dans lequel le dispositif d'imagerie tridimensionnel (24) comprend au moins un dispositif de télé-imagerie électro-optique, en particulier en forme de caméra stéréo (26), de dispositif de détection et de télémétrie par la lumière et/ou de caméra à temps de propagation.

8. Véhicule agricole comprenant au moins un système d'exploitation (10) selon l'une quelconque des revendications 1 à 7.

9. Un procédé pour exploiter interactivement, au moyen d'un système d'exploitation (10) selon les revendications 1 à 7, un dispositif de transfert commandable (18) pour des produits récoltés (44) d'un véhicule agricole, en particulier d'une récolteuse automotrice (12), comprenant les étapes consistant à
- déduire un ensemble de données tridimensionnel pour un objet réel capturé par un dispositif d'imagerie tridimensionnel (24),
- afficher un objet sur l'unité d'affichage tactile (28),
- recevoir une rétroaction de l'unité d'affichage (28) après une interaction par entrée tactile avec l'objet affiché (40),
- générer des signaux d'instruction (46) basés sur l'ensemble de données tridimensionnel et correspondant à l'interaction avec l'objet affiché (40) pour exploiter le dispositif de transfert (18).

10. Procédé selon la revendication 9, comprenant également l'étape consistant à générer des signaux d'instruction (46) en forme de signaux de commande (48) pour commander directement le dispositif de transfert (18).

11. Procédé selon la revendication 9 ou 10, comprenant également l'étape consistant à reconnaître un objet réel capturé.

12. Procédé selon l'une quelconque des revendications 9 à 11, comprenant également l'étape consistant à stocker et/ou à retrouver des données de référence (34), en particulier pour comparer un ensemble de données tridimensionnel déduit avec des données de référence (34).

13. Procédé selon l'une quelconque des revendications 9 à 12, comprenant également l'étape consistant à attribuer et/ou à modifier des données (34, 38) correspondant à un objet affiché (40).

14. Procédé selon l'une quelconque des revendications 9 à 13, comprenant également l'étape consistant à générer une rétroaction visuelle et/ou auditive, en particulier à une entrée tactile.

15. Procédé selon l'une quelconque des revendications 9 à 14, comprenant également l'étape consistant à générer au moins un élément virtuel (42) correspondant à un objet affiché.
